# EUROPEAN PATENT APPLICATION

(11) **EP 2 727 686 A1**
(43) Date of publication of application: **07.05.2014**
(21) Application number: 13174450.0
(22) Date of filing: 30.08.2013
(51) Int. Cl.: B25B 17/02, B25B 19/00, B60B 29/00

(54) **Socket wrench**

(30) Priority: 30.10.2012 US 201213663567
(71) Applicant: Wang, Yen-Hui, Taichung City (TW); Wang, Sin-Heng, Taichung City (TW); Wang, Chin-He, Taichung City (TW)
(72) Inventor: Wang, Yen-Hui, Taichung City (TW); Wang, Sin-Heng, Taichung City (TW); Wang, Chin-He, Taichung City (TW)
(74) Representative: Hosenthien-Held, Jutta

(57) **Abstract**

A socket wrench includes a handle (10) having a housing (12), a drive shank (13) having a ratchet wheel (131) mounted in the housing, two pawl members (16) engaged with the ratchet wheel, a switching member (15) located between the pawl members, two elastic members (S) each biased between the housing and the respective pawl member, a control knob (14) connected with the switching member, a driven arm (21) having a mounting sleeve (20) and an arcuate mounting slot (22), a connecting plate (17) provided on the handle, and two driving arms (18; 19) provided on the connecting plate and received in the mounting slot. When in use, one of the driving arms drives the driven arm by a leverage to drive the drive shank to rotate a socket (30a) to operate a workpiece in an energy-saving manner.

## Description

The present invention relates to a hand tool and, more particularly, to a socket wrench for operating a workpiece, such as a bolt, screw and the like.

A conventional socket wrench is used to operate (screw or unscrew) a workpiece, such as a bolt, screw and the like. Thus, a user can operate the socket wrench to screw a bolt onto a tire or to unscrew the bolt from the tire. However, the conventional socket wrench does not have an energy-saving mechanism so that it is necessary for a user to apply a larger force on the handle of the socket wrench to drive the socket wrench so as to unscrew the bolt from the tire. Thus, a user with a smaller strength cannot drive and unscrew the bolt easily when the bolt is locked too tightly and closely, thereby wasting the user's force and energy, and thereby easily causing inconvenience when unscrewing the bolt.

In accordance with the present invention, there is provided a socket wrench, comprising a handle having a first end provided with a housing and a second end provided with a grip portion, a drive shank having a first end provided with a ratchet wheel mounted in the housing of the handle, two pawl members pivotally mounted in the housing of the handle and engaged with the ratchet wheel of the drive shank, a switching member rotatably mounted in the housing of the handle and located between the pawl members, two elastic members each mounted in the housing of the handle and each biased between the housing of the handle and a respective one of the pawl members, a control knob rotatably mounted on the housing of the handle and connected with the switching member, a driven arm having a first end provided with a mounting sleeve secured on the drive shank and a second end provided with an arcuate mounting slot, a connecting plate provided on the handle, two driving arms provided on the connecting plate and received in the mounting slot of the driven arm, and a snap ring secured on the drive shank and abutting the mounting sleeve of the driven arm. The driving arms are located at two opposite ends of the connecting plate. The drive shank has a periphery provided with a polygonal connecting portion. The mounting sleeve of the driven arm has an interior provided with a polygonal mounting hole mounted on the connecting portion of the drive shank. The control knob drives the switching member to pivot the pawl members so that one of the pawl members provides a oneway ratcheting function to the ratchet wheel of the drive shank, and the housing of the handle drives the ratchet wheel of the drive shank in one direction only so as to screw or unscrew a workpiece. The mounting sleeve is located under the housing of the handle. The snap ring is located under the mounting sleeve of the driven arm. The mounting slot of the driven arm has two arcuate side walls. One of the driving arms is movable to abut one of the arcuate side walls of the mounting slot, and the other one of the driving arms is movable in the opposite direction to abut the other one of the arcuate side walls of the mounting slot.

The primary objective of the present invention is to provide a socket wrench with an energy-saving function.

According to the primary advantage of the present invention, when the handle is driven, one of the driving arms produces a leverage to the driven arm to drive the socket so as to achieve an energy-saving function, so that a user having smaller strength can drive and detach the workpiece from the tire easily and conveniently, thereby saving the user's force and energy.

Further benefits and advantages of the present invention will become apparent after a careful reading of the detailed description with appropriate reference to the accompanying drawings.

In the drawings:

FIG. 1 is a perspective view of a socket wrench in accordance with the preferred embodiment of the present invention.

FIG. 2 is an exploded perspective view of the socket wrench as shown in FIG. 1.

FIG. 3 is a front cross-sectional view of the socket wrench as shown in FIG. 1.

FIG. 4 is a cross-sectional view of the socket wrench taken along line 4-4 as shown in FIG. 3.

FIG. 5 is a top cross-sectional view of the socket wrench as shown in FIG. 1.

FIG. 6 is a schematic operational view of the socket wrench as shown in FIG. 1 in use.

FIG. 7 is a front cross-sectional view of the socket wrench as shown in FIG. 6.

FIG. 8 is a front cross-sectional view of the socket wrench as shown in FIG. 7.

FIG. 9 is a front cross-sectional view of the socket wrench as shown in FIG. 8.

FIG. 10 is a perspective view of a socket wrench in accordance with another preferred embodiment of the present invention.

FIG. 11 is an exploded perspective view of the socket wrench as shown in FIG. 10.

FIG. 12 is a front cross-sectional view of the socket wrench as shown in FIG. 10.

FIG. 13 is a schematic operational view of the socket wrench as shown in FIG. 10 in use.

FIG. 14 is a front cross-sectional view of the socket wrench as shown in FIG. 13, showing a force applying state of the socket wrench.

FIG. 15 is a front cross-sectional view of the socket wrench as shown in FIG. 13, showing a returned state of the socket wrench.

FIG. 16 is a perspective view of a socket wrench in accordance with another preferred embodiment of the present invention.

FIG. 17 is an exploded perspective view of the socket wrench as shown in FIG. 16.

FIG. 18 is a schematic operational view of the socket wrench as shown in FIG. 16, showing a force applying state of the socket wrench.

FIG. 19 is a schematic operational view of the socket wrench as shown in FIG. 16, showing a returned state of the socket wrench.

FIG. 20 is a perspective view of a socket wrench in accordance with another preferred embodiment of the present invention.

FIG. 21 is an exploded perspective view of the socket wrench as shown in FIG. 20.

FIG. 22 is a cross-sectional view of the socket wrench as shown in FIG. 20.

FIG. 23 is a schematic cross-sectional operational view of the socket wrench as shown in FIG. 20, showing a force applying state of the socket wrench.

FIG. 24 is a schematic cross-sectional operational view of the socket wrench as shown in FIG. 20, showing a returned state of the socket wrench.

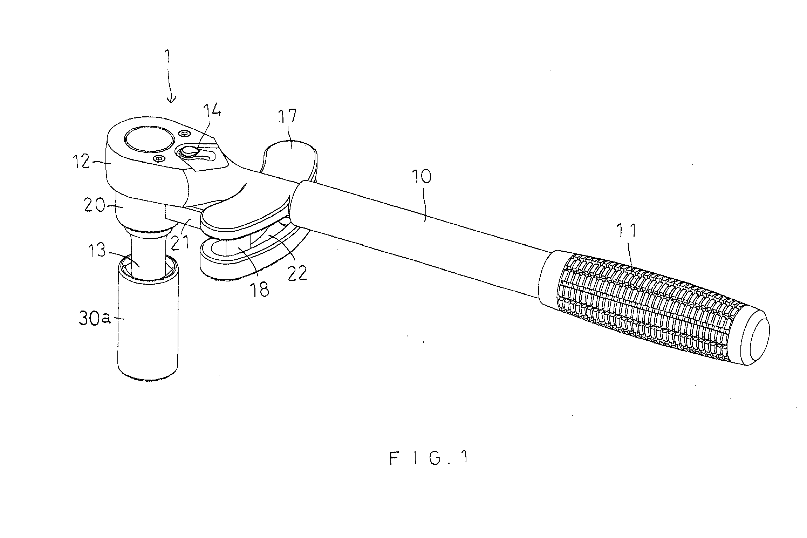

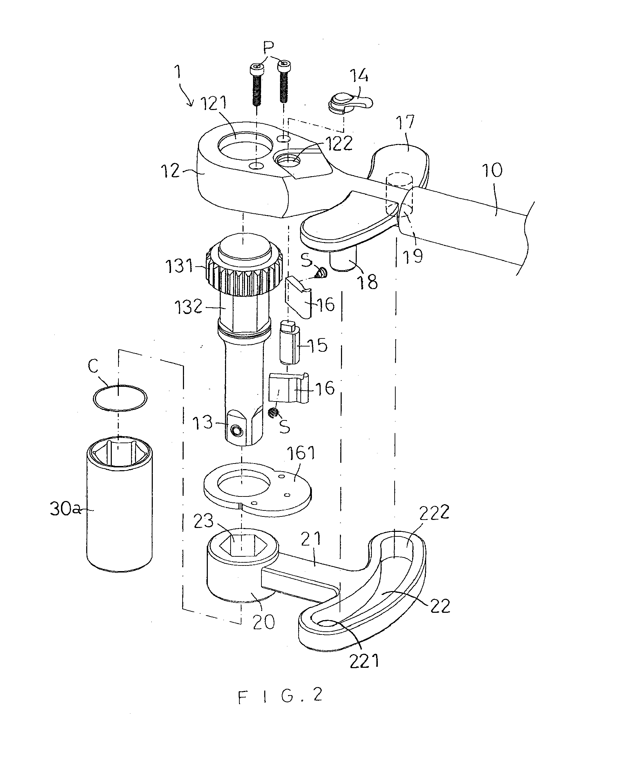

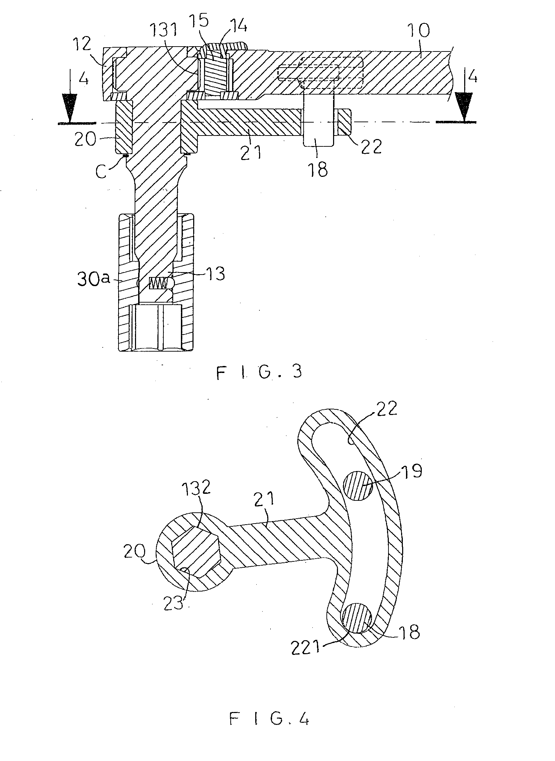

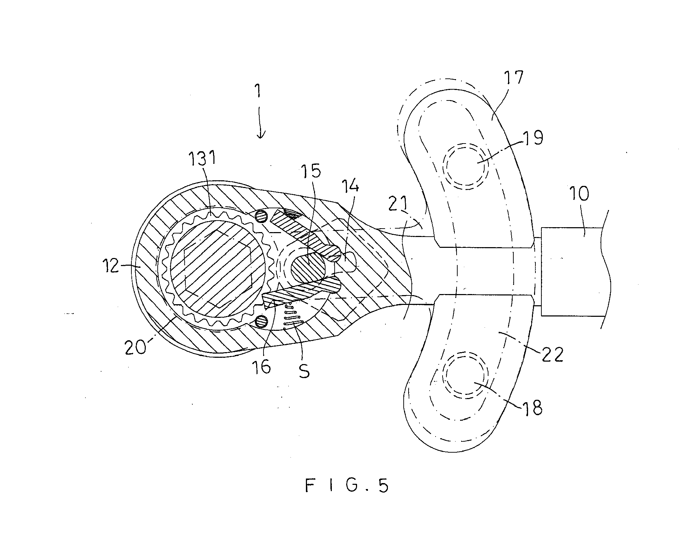

Referring to the drawings and initially to FIGS. 1-5, a socket wrench 1 in accordance with the preferred embodiment of the present invention comprises a handle 10 having a first end provided with a housing 12 and a second end provided with a grip portion 11, a drive shank 13 having a first end provided with a ratchet wheel 131 mounted in the housing 12 of the handle 10, two pawl members 16 pivotally mounted in the housing 12 of the handle 10 and engaged with the ratchet wheel 131 of the drive shank 13, a switching member 15 rotatably mounted in the housing 12 of the handle 10 and located between the pawl members 16, two elastic members "S" each mounted in the housing 12 of the handle 10 and each biased between the housing 12 of the handle 10 and a respective one of the pawl members 16, a control knob 14 rotatably mounted on the housing 12 of the handle 10 and connected with the switching member 15, a driven arm 21 having a first end provided with a mounting sleeve 20 secured on the drive shank 13 and a second end provided with an arcuate mounting slot 22, a connecting plate 17 provided on the handle 10, two driving arms 18 and 19 provided on the connecting plate 17 and received in the mounting slot 22 of the driven arm 21, a snap ring "C" secured on the drive shank 13 and abutting the mounting sleeve 20 of the driven arm 21, and a bottom plate 161 mounted on the housing 12 of the handle 10 and abutting the ratchet wheel 131 of the drive shank 13 to prevent the ratchet wheel 131 of the drive shank 13 from being detached from the housing 12 of the handle 10.

The handle 10 has a fixed length or has a telescopically adjustable structure. The housing 12 of the handle 10 has an interior provided with a receiving chamber 121 for receiving the ratchet wheel 131 of the drive shank 13 and provided with a receiving space 122 for receiving the switching member 15, the pawl members 16 and the elastic members "S". The receiving space 122 of the housing 12 is connected to the receiving chamber 121. The control knob 14 is partially received in the receiving space 122 of the housing 12.

The connecting plate 17 is located beside the housing 12 of the handle 10 and has an arcuate shape to matching that of the mounting slot 22 of the driven arm 21. The driving arms 18 and 19 are located at two opposite ends of the connecting plate 17.

The drive shank 13 has a second end protruding outward from the housing 12 of the handle 10. The drive shank 13 has a periphery provided with a polygonal connecting portion 132. Preferably, the connecting portion 132 of the drive shank 13 has a hexagonal shape. The connecting portion 132 of the drive shank 13 is located under the ratchet wheel 131.

A socket 30a is mounted on the drive shank 13. The socket 30a has a first end mounted on the second end of the drive shank 13 and a second end mounted on a workpiece, such as a bolt, screw and the like.

The mounting sleeve 20 of the driven arm 21 is located under the bottom plate 161 and the housing 12 of the handle 10. The mounting sleeve 20 of the driven arm 21 has an interior provided with a polygonal mounting hole 23 mounted on the connecting portion 132 of the drive shank 13. Preferably, the mounting hole 23 of the mounting sleeve 20 has a hexagonal shape. The snap ring "C" is located under the mounting sleeve 20 of the driven arm 21. The mounting slot 22 of the driven arm 21 has two arcuate side walls 221 and 222. One of the driving arms 18 and 19 is movable to abut one of the arcuate side walls 221 and 222 of the mounting slot 22, and the other one of the driving arms 18 and 19 is movable in the opposite direction to abut the other one of the arcuate side walls 221 and 222 of the mounting slot 22.

The control knob 14 drives the switching member 15 to pivot the pawl members 16 so that one of the pawl members 16 provides a oneway ratcheting function to the ratchet wheel 131 of the drive shank 13, and the housing 12 of the handle 10 drives the ratchet wheel 131 of the drive shank 13 in one direction only so as to operate (screw or unscrew) the workpiece.

The bottom plate 161 is located between the ratchet wheel 131 of the drive shank 13 and the mounting sleeve 20 of the driven arm 21. The bottom plate 161 is fixed on a bottom of the housing 12 of the handle 10 by two fastening bolts "P" to cover the receiving chamber 121 and the receiving space 122 of the housing 12. The bottom plate 161 abuts the switching member 15, the pawl members 16 and the elastic members "S" to prevent the switching member 15, the pawl members 16 and the elastic members "S" from being detached from the housing 12 of the handle 10.

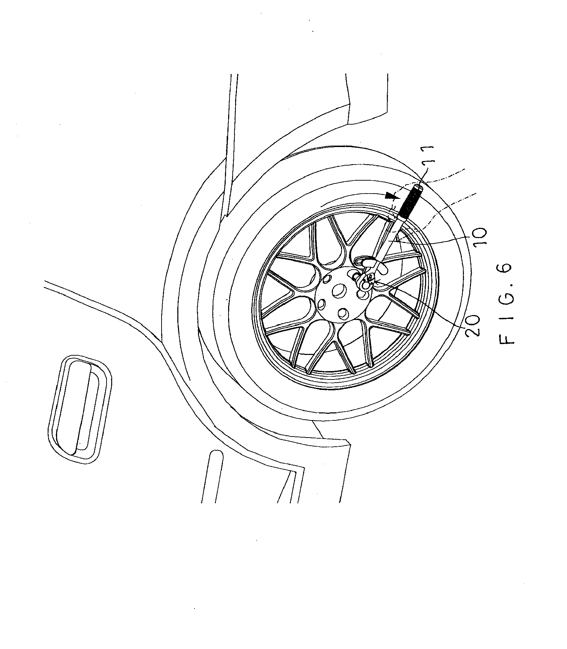

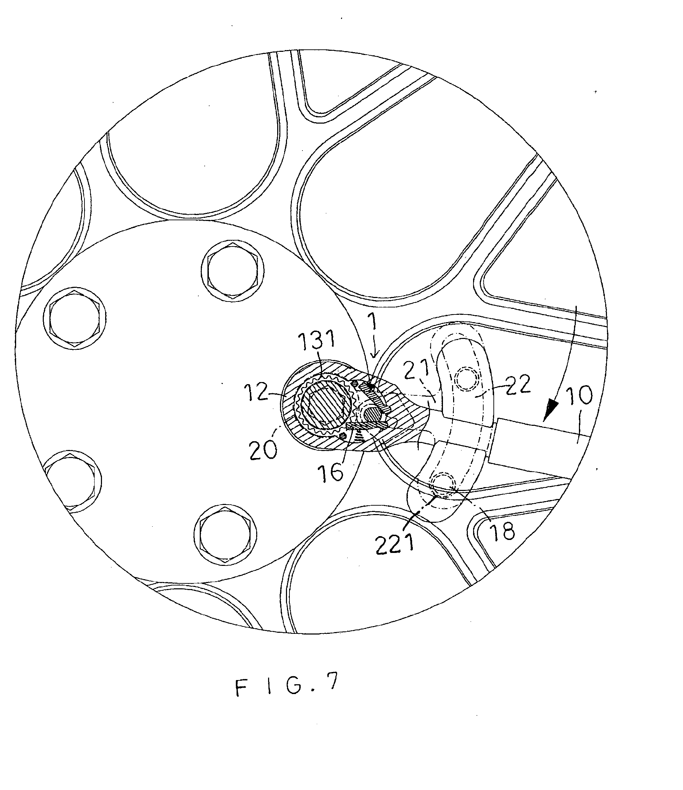

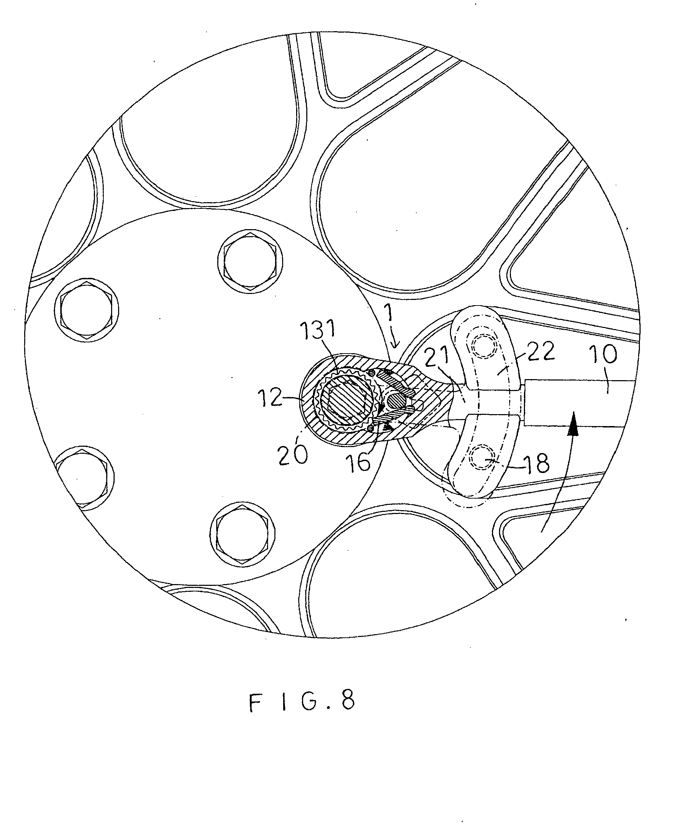

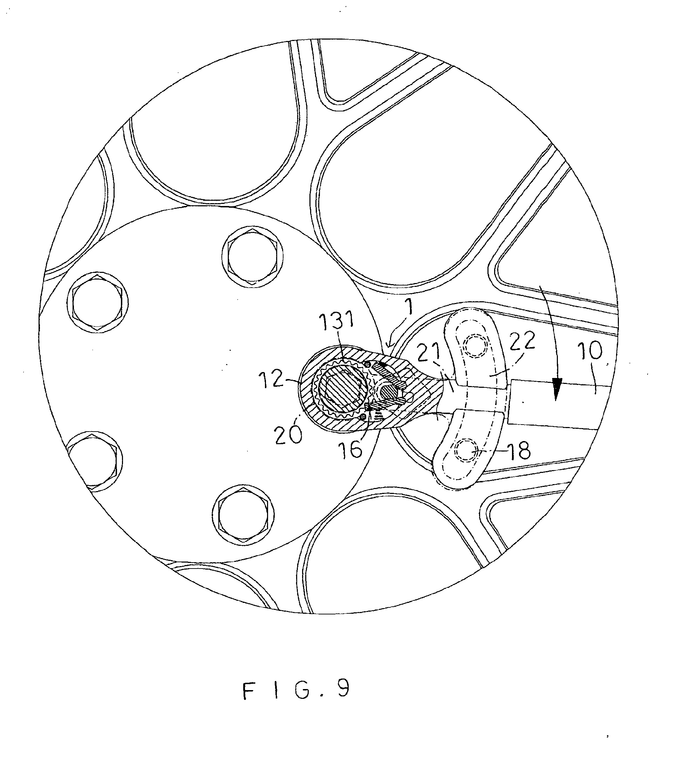

In operation, referring to FIGS. 6-9 with reference to FIGS. 1-5, one of the pawl members 16 engages the ratchet wheel 131 so that when the handle 10 is rotated in the first (clockwise) direction as shown in FIG. 6, the housing 12 is rotated to drive one of the pawl members 16 to drive the ratchet wheel 131 which drives the drive shank 13 which drives the socket 30a which drives the workpiece. Reversely, when the handle 10 is rotated in the second (counterclockwise) direction, one of the pawl members 16 skips the ratchet wheel 131 so that the handle 10 performs an idle rotation in the second (counterclockwise) direction. In such a manner, the handle 10 is rotated successively to rotate the workpiece in a oneway manner so as to tighten the workpiece on a tire. After the workpiece is fixed and cannot be rotated any more, the drive shank 13 is fixed so that the ratchet wheel 131 is fixed and cannot be rotated. At this time, when the handle 10 is further rotated, one of the driving arms 18 and 19 pushes one of the arcuate side walls 221 and 222 of the mounting slot 22 of the driven arm 21 as shown in FIG. 7 to rotate the driven arm 21 which rotates the mounting sleeve 20 which rotates the connecting portion 132 which rotates the drive shank 13 which drives the socket 30a which drives the workpiece so as to further tighten the workpiece exactly and closely. Thus, one of the driving arms 18 and 19 drives the driven arm 21 by a leverage to drive the socket 30a so as to tighten the workpiece in an energy-saving manner so that a user can tighten the workpiece easily and conveniently. When the handle 10 is rotated in the second (counterclockwise) direction as shown in FIG. 8, one of the pawl members 16 skips the ratchet wheel 131 so that the handle 10 performs an idle rotation in the second (counterclockwise) direction. When the handle 10 is rotated in the first (clockwise) direction as shown in FIG. 9, one of the pawl members 16 engages the ratchet wheel 131 again.

On the contrary, when the user wishes to loosen the workpiece, the control knob 14 drives the switching member 15 to pivot the pawl members 16 so that the other one of the pawl members 16 engages the ratchet wheel 131. At this time, the workpiece is fixed and cannot be rotated any more, and the drive shank 13 is fixed so that the ratchet wheel 131 is fixed and cannot be rotated. Therefore, when the handle 10 is rotated, the other one of the driving arms 18 and 19 pushes the other one of the arcuate side walls 221 and 222 of the mounting slot 22 of the driven arm 21 to rotate the driven arm 21 which rotates the mounting sleeve 20 which rotates the connecting portion 132 which rotates the drive shank 13 which drives the socket 30a which drives the workpiece so as to loosen the workpiece. Thus, the other one of the driving arms 18 and 19 drives the driven arm 21 by a leverage to drive the socket 30a so as to loosen the workpiece in an energy-saving manner so that a user with smaller strength can loosen the workpiece easily and conveniently. After the workpiece is loosened, the handle 10 is rotated successively to operate the workpiece. For example, when the handle 10 is rotated in the first (counterclockwise) direction, the housing 12 is rotated to drive the other one of the pawl members 16 to drive the ratchet wheel 131 which drives the drive shank 13 which drives the socket 30a which drives the workpiece. Reversely, when the handle 10 is rotated in the second (clockwise) direction, the other one of the pawl members 16 skips the ratchet wheel 131 so that the handle 10 performs an idle rotation in the second (clockwise) direction. In such a manner, the handle 10 is rotated successively to rotate the workpiece in a oneway manner so as to loosen and detach the workpiece from the tire.

Accordingly, when the handle 10 is driven, one of the driving arms 18 and 19 produces a leverage to the driven arm 21 to drive the socket 30a in an energy-saving manner so as to achieve an energy-saving function, so that a user having smaller strength can drive and detach the workpiece from the tire easily and conveniently, thereby saving the user's force and energy.

In the preferred embodiment of the present invention, the center of the ratchet wheel 131 and one of the driving arms 18 and 19 define a first line, while the center of the ratchet wheel 131 and the other one of the driving arms 18 and 19 define a second line, wherein the angle between the first line and the second line is ranged between fifteen and twenty-five degrees (15-25°), so that the driving arms 18 and 19 can provide the optimum energy-saving effect. In addition, the center of the ratchet wheel 131 and any one of the driving arms 18 and 19 define a first length, while the handle 10 has a second length, wherein the ratio of the first length and the second length is ranged between one eighth and one ninth (1/8-1/9), so that the driving arms 18 and 19 can provide the optimum energy-saving effect.

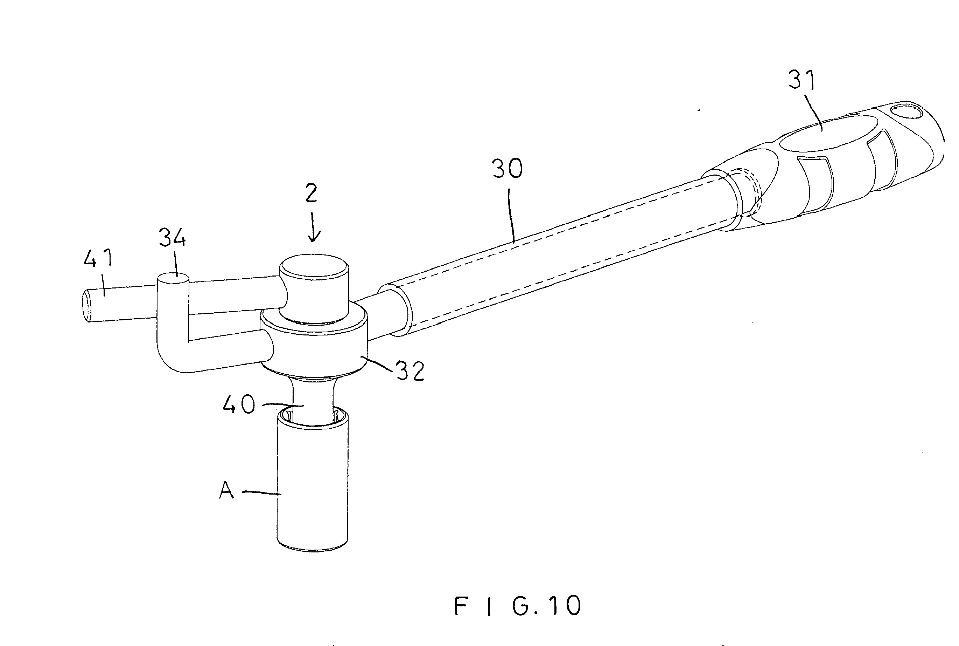

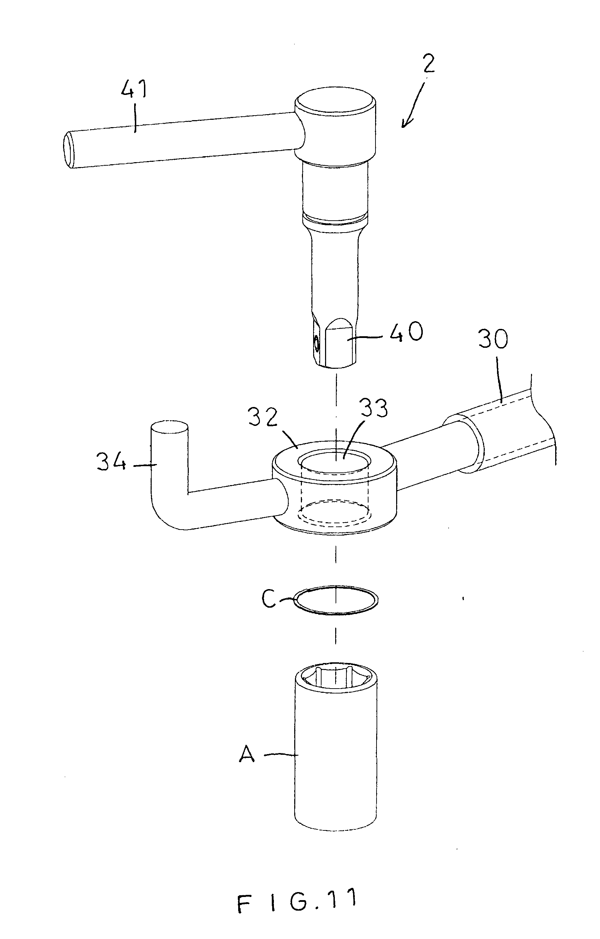

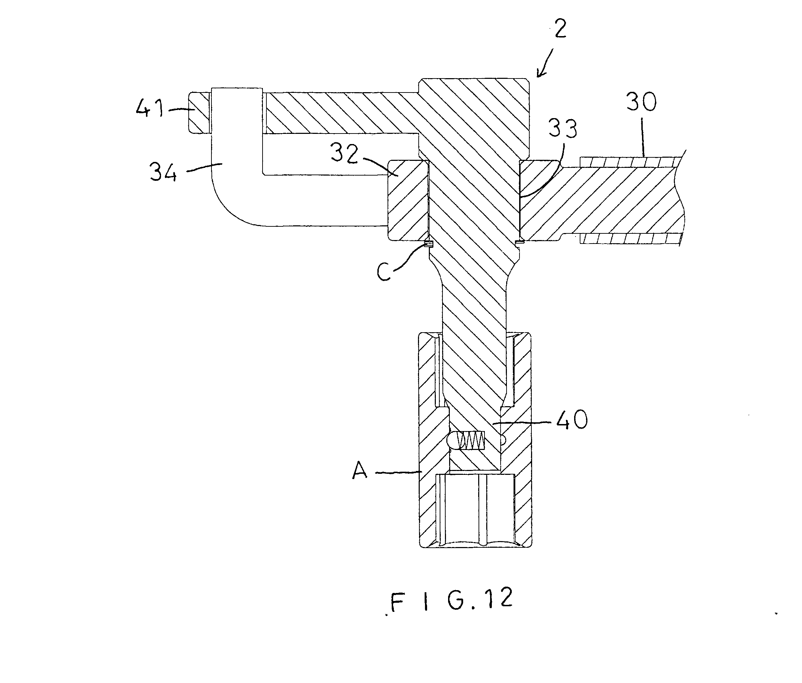

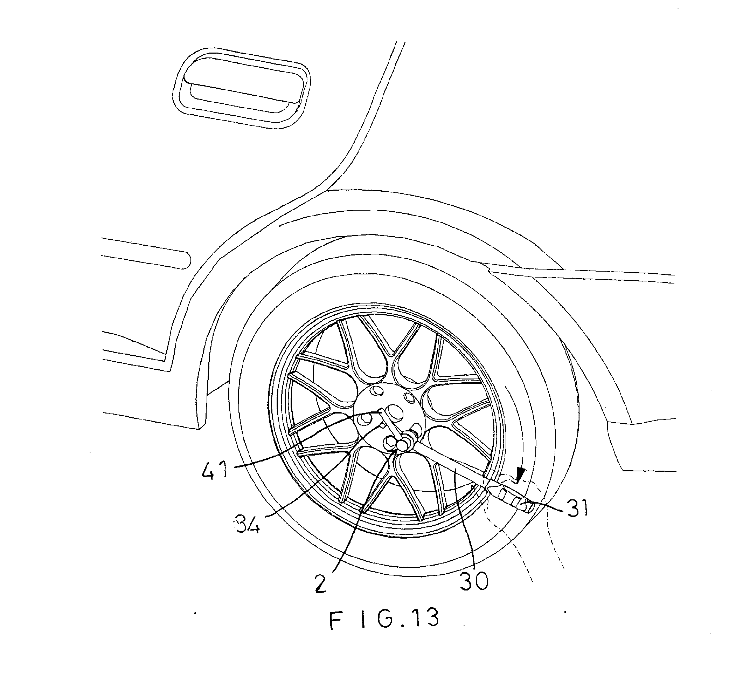

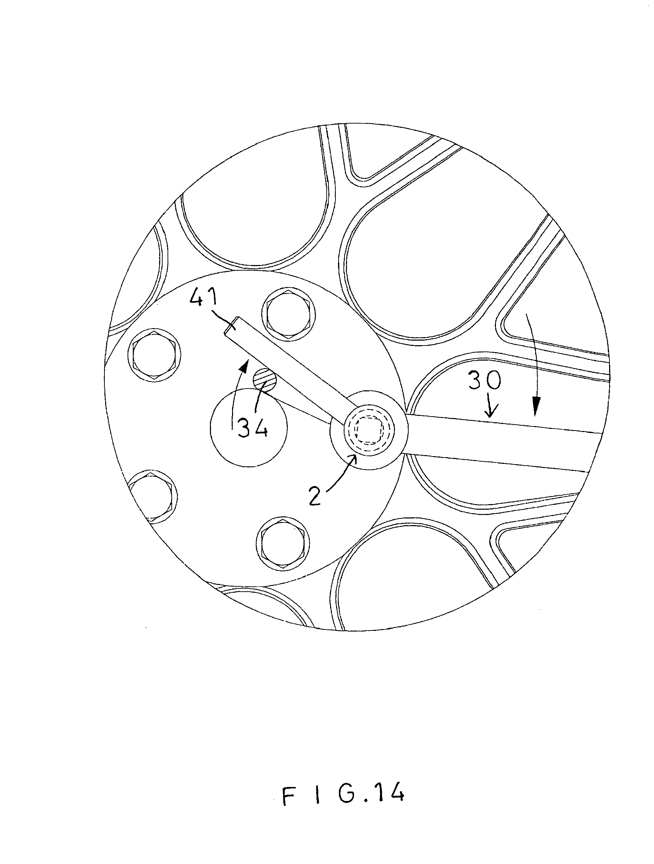

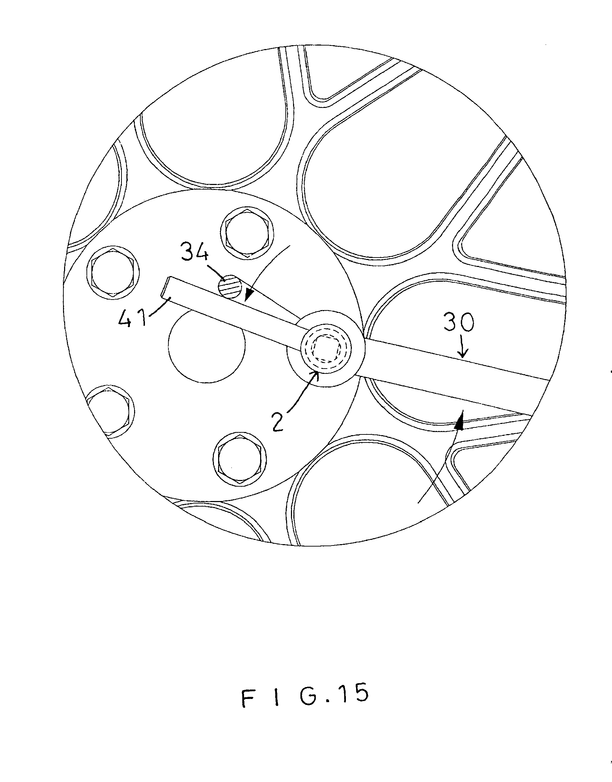

Referring to FIGS. 10-15, a socket wrench 2 in accordance with another preferred embodiment of the present invention comprises a handle 30 having a first end provided with a pivot portion 32 and a second end provided with a grip portion 31, a first force arm 34 provided on and extended from the pivot portion 32 of the handle 30, a drive shank 40 mounted on the pivot portion 32 of the handle 30, a socket "A" mounted on the drive shank 40, a snap ring "C" secured on the drive shank 40 and abutting the bottom of the pivot portion 32 of the handle 30, and a second force arm 41 provided on the drive shank 40. The handle 30 has a fixed length or has a telescopically adjustable structure. The pivot portion 32 of the handle 30 has an interior provided with a pivot hole 33 pivotally mounted on the drive shank 40. The pivot portion 32 of the handle 30 is located between the first force arm 34 and the grip portion 31. The first force arm 34 has a substantially L-shaped profile. The first force arm 34 is movable to abut the second force arm 41 to produce a leverage to the second force arm 41 so as to achieve an energy-saving function. The second force arm 41 and the drive shank 40 construct a substantially L-shaped structure. The drive shank 40 has a first end extended through the pivot portion 32 of the handle 30 and a second end connected with the second force arm 41. The socket "A" has a first end mounted on the second end of the drive shank 40 and a second end mounted on a workpiece, such as a bolt, screw and the like. The snap ring "C" is located under the pivot hole 33 of the pivot portion 32 of the handle 30.

In practice, when the handle 30 is driven, the first force arm 34 is moved to abut the second force arm 41 which drives the drive shank 40 which drives the socket "A" which drives the workpiece so as to detach the workpiece from the tire. Thus, when the handle 30 is driven, the first force arm 34 produces a leverage to the second force arm 41 to drive the socket "A" in an energy-saving manner so as to achieve an energy-saving function, so that a user having smaller strength can drive and detach the workpiece from the tire easily and conveniently, thereby saving the user's force and energy.

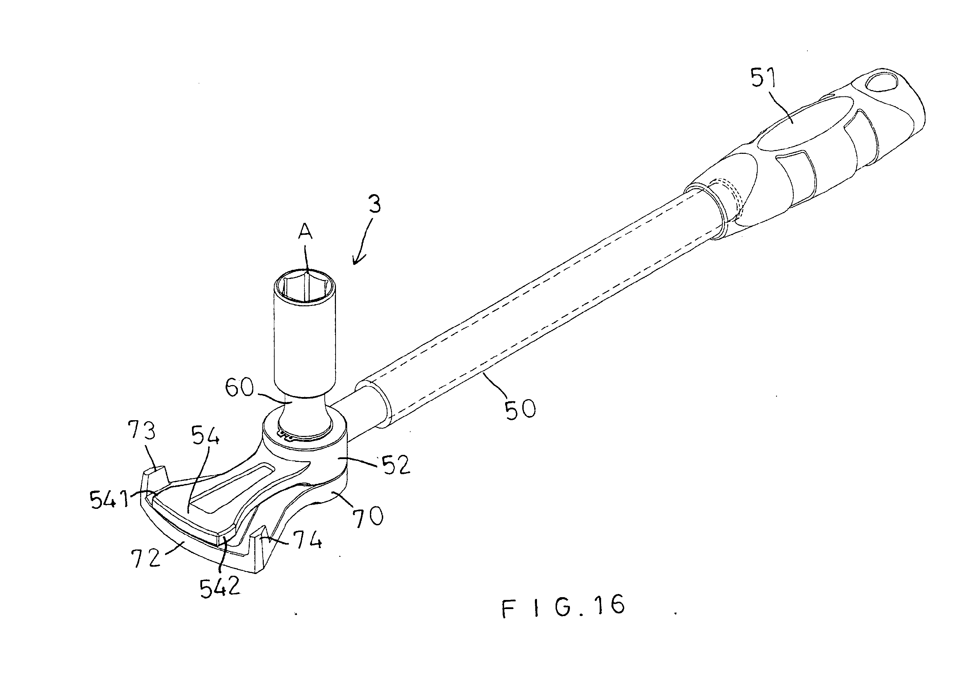

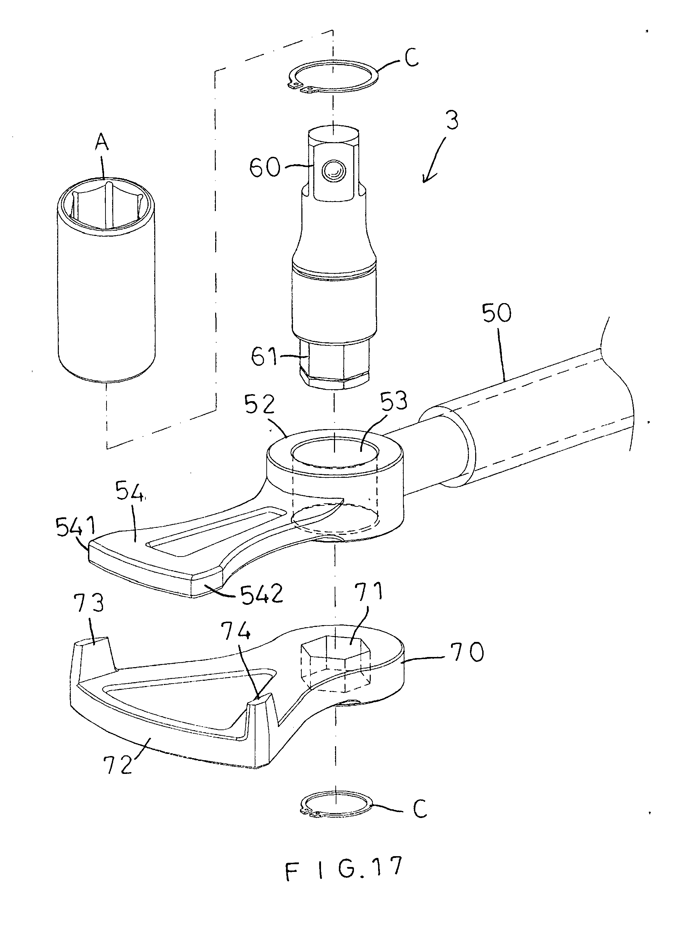

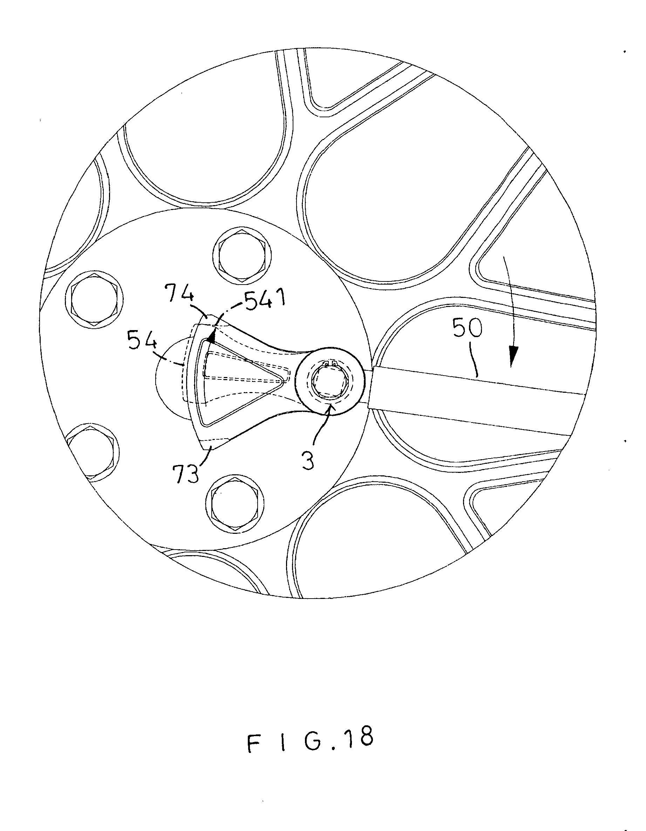

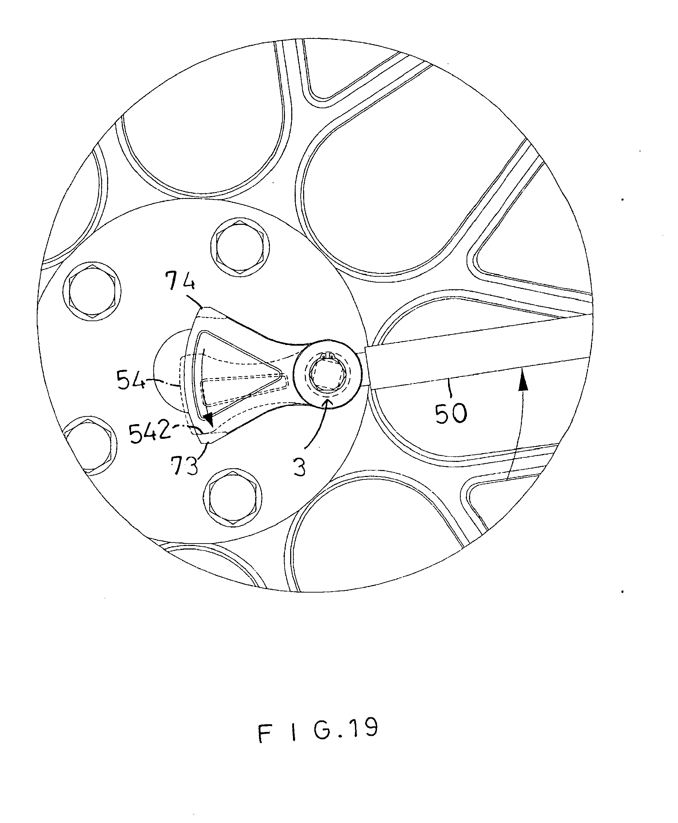

Referring to FIGS. 16-19, a socket wrench 3 in accordance with another preferred embodiment of the present invention comprises a handle 50 having a first end provided with a pivot portion 52 and a second end provided with a grip portion 51, a first force arm 54 provided on and extended from the pivot portion 52 of the handle 50, a drive shank 60 mounted on the pivot portion 52 of the handle 50 and provided with a hexagonal fixing portion 61, a socket "A" mounted on the drive shank 60, a driven member 70 connected with the drive shank 60 and having a first end provided with a hexagonal fixing hole 71 secured on the fixing portion 61 of the drive shank 60 and a second end provided with a connecting plate 72, two snap rings "C" secured on the drive shank 60 and abutting the pivot portion 52 of the handle 50 and the driven member 70, and two second force arms 73 and 74 provided on the connecting plate 72 of the driven member 70. The first force arm 54 has a flat shape. The first force arm 54 has two driven faces 541 and 542. The first force arm 54 is movable between the second force arms 73 and 74 to abut one of the second force arms 73 and 74 to produce a leverage to the second force arms 73 and 74 so as to achieve an energy-saving function. One of the driven faces 541 and 542 of the first force arm 54 is movable to abut one of the second force arms 73 and 74, and the other one of the driven faces 541 and 542 of the first force arm 54 is movable to abut the other one of the second force arms 73 and 74. The connecting plate 72 of the driven member 70 has a sector shape. The second force arms 73 and 74 are located at two opposite sides of the connecting plate 72 of the driven member 70. The handle 50 has a fixed length or has a telescopically adjustable structure. The pivot portion 52 of the handle 50 has an interior provided with a pivot hole 53 pivotally mounted on the drive shank 60. The pivot portion 52 of the handle 50 is located between the first force arm 54 and the grip portion 51. The drive shank 60 is extended through the pivot portion 52 of the handle 50. The socket "A" has a first end mounted on the drive shank 60 and a second end mounted on a workpiece, such as a bolt, screw and the like.

In practice, when the handle 50 is driven, the first force arm 54 is moved to abut one of the second force arms 73 and 74 to drive the driven member 70 which drives the drive shank 60 which drives the socket "A" which drives the workpiece so as to detach the workpiece from the tire. Thus, when the handle 50 is driven, the first force arm 54 produces a leverage to one of the second force arms 73 and 74 to drive the socket "A" in an energy-saving manner so as to achieve an energy-saving function, so that a user having smaller strength can drive and detach the workpiece from the tire easily and conveniently, thereby saving the user's force and energy.

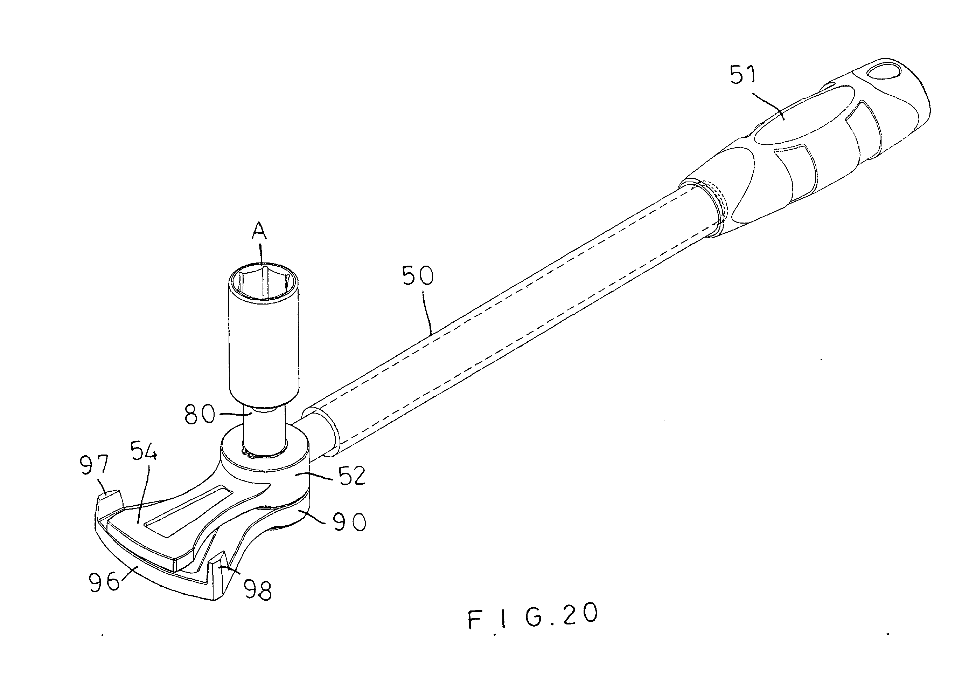

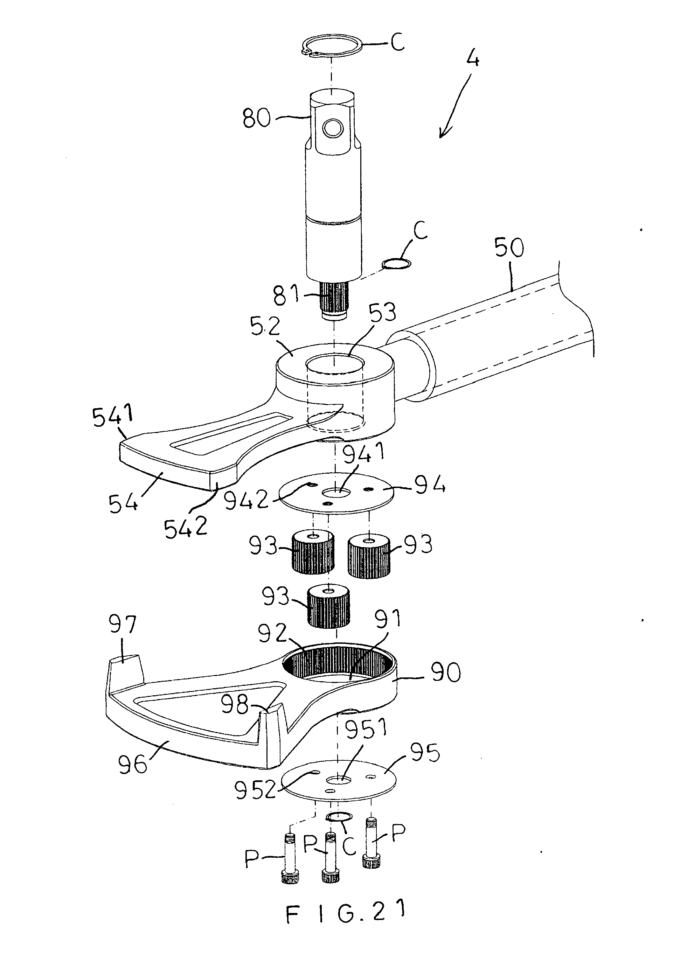

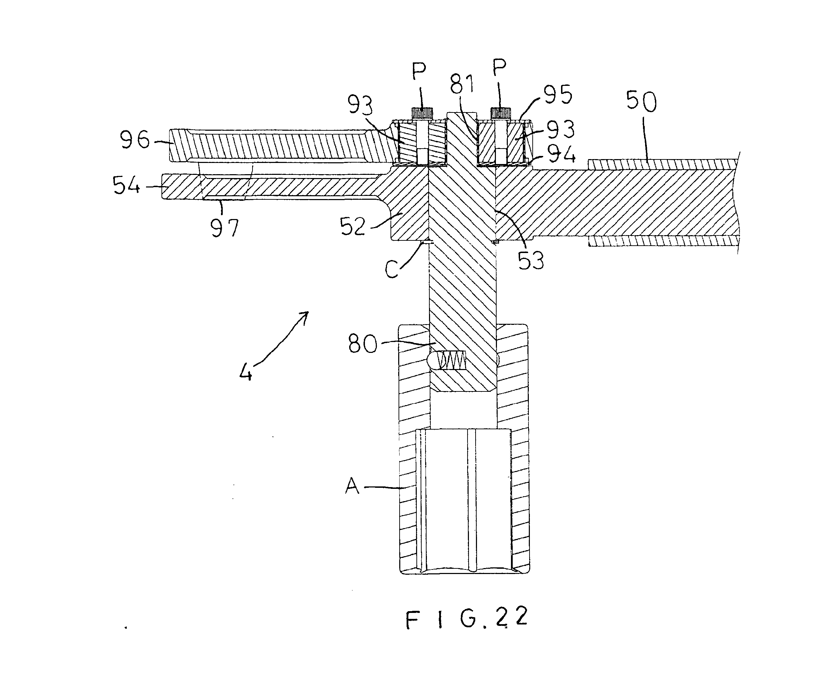

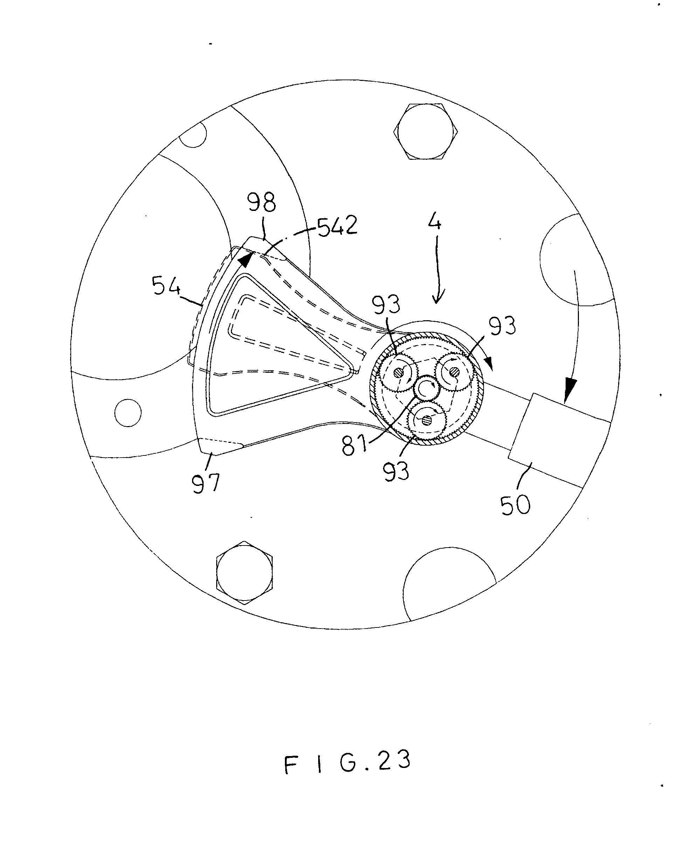

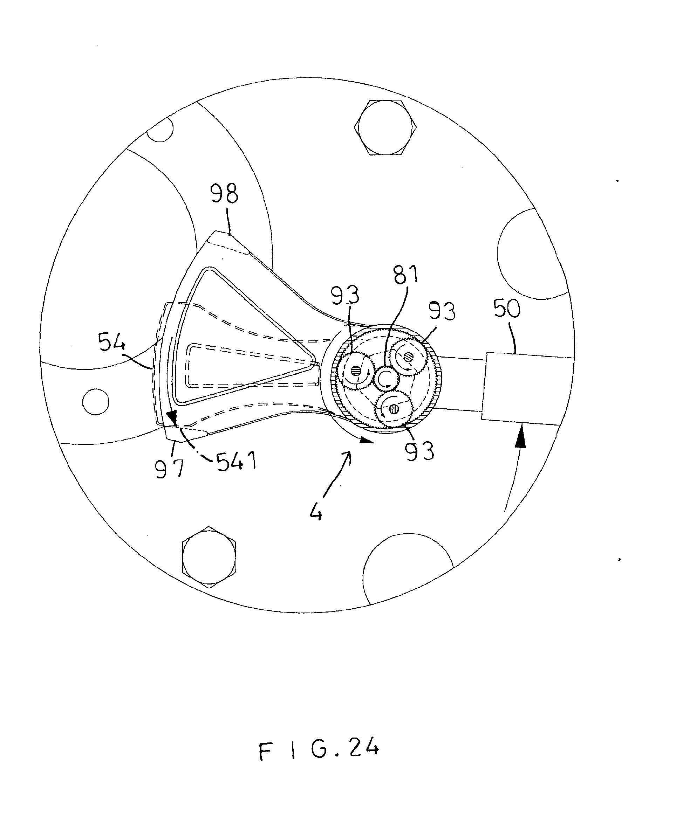

Referring to FIGS. 20-24, a socket wrench 4 in accordance with another preferred embodiment of the present invention comprises a handle 50 having a first end provided with a pivot portion 52 and a second end provided with a grip portion 51, a first force arm 54 provided on and extended from the pivot portion 52 of the handle 50, a drive shank 80 mounted on the pivot portion 52 of the handle 50 and provided with a ratchet wheel 81, a socket "A" mounted on the drive shank 80, a driven member 90 connected with the drive shank 80 and having a first end provided with a circular receiving hole 91 having an annular toothed wall 92 and a second end provided with a connecting plate 96, two second force arms 97 and 98 provided on the connecting plate 96 of the driven member 90, a plurality of gears 93 each intermeshing with the ratchet wheel 81 of the drive shank 80 and the annular toothed wall 92 of the driven member 90, a first cover plate 94 mounted on a top of the receiving hole 91 of the driven member 90, a second cover plate 95 mounted on a bottom of the receiving hole 91 of the driven member 90, and a plurality of screws "P" extended through the second cover plate 95, the gears 93 and the first cover plate 94.

The first force arm 54 has a flat shape. The first force arm 54 has two driven faces 541 and 542. The first force arm 54 is movable between the second force arms 97 and 98 to abut one of the second force arms 97 and 98 to produce a leverage to the second force arms 97 and 98 so as to achieve an energy-saving function. One of the driven faces 541 and 542 of the first force arm 54 is movable to abut one of the second force arms 97 and 98, and the other one of the driven faces 541 and 542 of the first force arm 54 is movable to abut the other one of the second force arms 97 and 98. The connecting plate 96 of the driven member 90 has a sector shape. The second force arms 97 and 98 are located at two opposite sides of the connecting plate 96 of the driven member 90. The handle 50 has a fixed length or has a telescopically adjustable structure. The pivot portion 52 of the handle 50 has an interior provided with a pivot hole 53 pivotally mounted on the drive shank 80. The pivot portion 52 of the handle 50 is located between the first force arm 54 and the grip portion 51. The drive shank 80 is extended through the pivot portion 52 of the handle 50. The socket "A" has a first end mounted on the drive shank 80 and a second end mounted on a workpiece, such as a bolt, screw and the like. The driven member 90 is sandwiched between the first cover plate 94 and the second cover plate 95 by the screws "P". The receiving hole 91 of the driven member 90 is closed by the first cover plate 94 and the second cover plate 95. The gears 93 are received in the receiving hole 91 of the driven member 90 and are limited between the first cover plate 94 and the second cover plate 95. The gears 93 co-operate to rotate the ratchet wheel 81 of the drive shank 80 to increase the torque of the drive shank 80. The first cover plate 94 is provide with a first shaft hole 941 and a plurality of screw holes 942. The second cover plate 95 is provide with a second shaft hole 951 and a plurality of through holes 952. The ratchet wheel 81 of the drive shank 80 is located between the gears 93. The ratchet wheel 81 of the drive shank 80 is extended through the first shaft hole 941 of the first cover plate 94 and the second shaft hole 951 of the second cover plate 95. The screws "P" are extended through the through holes 952 of the second cover plate 95 and are screwed into the screw holes 942 of the first cover plate 94. The pivot portion 52 of the handle 50 and the driven member 90 are limited on the drive shank 80 by snap rings "C".

In practice, when the handle 50 is driven, the first force arm 54 is moved to abut one of the second force arms 97 and 98 to drive the driven member 90 which drives the drive shank 90 which drives the socket "A" which drives the workpiece so as to detach the workpiece from the tire. Thus, when the handle 50 is driven, the first force arm 54 produces a leverage to one of the second force arms 97 and 98 to drive the socket "A" in an energy-saving manner so as to achieve an energy-saving function, so that a user having smaller strength can drive and detach the workpiece from the tire easily and conveniently, thereby saving the user's force and energy.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A socket wrench, comprising:
a handle (10) having a first end provided with a housing (12) and a second end provided with a grip portion (11);
a drive shank (13) having a first end provided with a ratchet wheel (131) mounted in the housing of the handle;
two pawl members (16) pivotally mounted in the housing of the handle and
engaged with the ratchet wheel of the drive shank;
a switching member (15) rotatably mounted in the housing of the handle and
located between the pawl members;
two elastic members (S) each mounted in the housing of the handle and each biased between the housing of the handle and a respective one of the pawl members;
a control knob (14) rotatably mounted on the housing of the handle and
connected with the switching member;
a driven arm (21) having a first end provided with a mounting sleeve (20) secured on the drive shank and a second end provided with an arcuate mounting slot (22);
a connecting plate (17) provided on the handle;
two driving arms (18; 19) provided on the connecting plate and received in the mounting slot of the driven arm; and
a snap ring (C) secured on the drive shank and abutting the mounting sleeve of the driven arm; wherein:
the driving arms are located at two opposite ends of the connecting plate;
the drive shank has a periphery provided with a polygonal connecting portion (132);
the mounting sleeve of the driven arm has an interior provided with a polygonal mounting hole (23) mounted on the connecting portion of the drive shank;
the control knob drives the switching member to pivot the pawl members so that one of the pawl members provides a oneway ratcheting function to the ratchet wheel of the drive shank, and the housing of the handle drives the ratchet wheel of the drive shank in one direction only so as to screw or unscrew a workpiece;
the mounting sleeve is located under the housing of the handle;
the snap ring is located under the mounting sleeve of the driven arm;
the mounting slot of the driven arm has two arcuate side walls (221; 222);
one of the driving arms is movable to abut one of the arcuate side walls of the mounting slot; and
the other one of the driving arms is movable in the opposite direction to abut the other one of the arcuate side walls of the mounting slot.

2. The socket wrench of claim 1, wherein:
the handle has a fixed length or has a telescopically adjustable structure;
the housing of the handle has an interior provided with a receiving chamber (121) for receiving the ratchet wheel of the drive shank and provided with a receiving space (122) for receiving the switching member, the pawl members and the elastic members;
the receiving space of the housing is connected to the receiving chamber; and
the control knob is partially received in the receiving space of the housing.

3. The socket wrench of claim 1, further comprising a socket (30a) mounted on the drive shank, wherein the drive shank has a second end protruding outward from the housing of the handle, and the socket has a first end mounted on the second end of the drive shank and a second end mounted on the workpiece.

4. The socket wrench of claim 1, wherein:
the center of the ratchet wheel and one of the driving arms define a first line;
the center of the ratchet wheel and the other one of the driving arms define a second line; and
the angle between the first line and the second line is ranged between fifteen and twenty-five degrees (15-25°).

5. The socket wrench of claim 1, wherein:
the center of the ratchet wheel and any one of the driving arms define a first length;
the handle has a second length; and
the ratio of the first length and the second length is ranged between one eighth and one ninth (1/8-1/9).

6. A socket wrench, comprising:
a handle (30) having a first end provided with a pivot portion (32) and a second end provided with a grip portion (31);
a first force arm (34) provided on and extended from the pivot portion of the handle;
a drive shank (40) mounted on the pivot portion of the handle; and
a second force arm (41) provided on the drive shank; wherein:
the pivot portion of the handle has an interior provided with a pivot hole (33) pivotally mounted on the drive shank;
the first force arm has a substantially L-shaped profile; and
the first force arm is movable to abut the second force arm.

7. The socket wrench of claim 6, wherein the handle has a fixed length or has a telescopically adjustable structure.

8. The socket wrench of claim 6, further comprising a socket (A) mounted on the drive shank.

9. A socket wrench, comprising:
a handle (50) having a first end provided with a pivot portion (52) and a second end provided with a grip portion (51);
a first force arm (54) provided on and extended from the pivot portion of the handle;
a drive shank (60) mounted on the pivot portion of the handle and provided with a fixing portion (61);
a driven member (70) connected with the drive shank and having a first end provided with a fixing hole (71) secured on the fixing portion of the drive shank and a second end provided with a connecting plate (72); and
two second force arms (73; 74) provided on the connecting plate of the driven member; wherein:
the first force arm has a flat shape;
the first force arm has two driven faces (541; 542);
the first force arm is movable between the second force arms to abut one of the second force arms;
one of the driven faces of the first force arm is movable to abut one of the second force arms;
the other one of the driven faces of the first force arm is movable to abut the other one of the second force arms;
the connecting plate of the driven member has a sector shape;
the pivot portion of the handle has an interior provided with a pivot hole (53) pivotally mounted on the drive shank; and
the drive shank is extended through the pivot portion of the handle.

10. The socket wrench of claim 9, wherein the handle has a fixed length or has a telescopically adjustable structure.

11. The socket wrench of claim 9, further comprising a socket (A) mounted on the drive shank.

12. A socket wrench, comprising:
a handle (50) having a first end provided with a pivot portion (52) and a second end provided with a grip portion;
a first force arm (54) provided on and extended from the pivot portion of the handle;
a drive shank (80) mounted on the pivot portion of the handle and provided with a ratchet wheel (81);
a driven member (90) connected with the drive shank and having a first end provided with a circular receiving hole (91) having an annular toothed wall (92) and a second end provided with a connecting plate (96);
two second force arms (97; 98) provided on the connecting plate of the driven member; and
a plurality of gears (93) each intermeshing with the ratchet wheel of the drive shank and the annular toothed wall of the driven member; wherein:
the first force arm has a flat shape;
the first force arm has two driven faces (541; 542);
the first force arm is movable between the second force arms to abut one of the second force arms;
one of the driven faces of the first force arm is movable to abut one of the second force arms;
the other one of the driven faces of the first force arm is movable to abut the other one of the second force arms;
the connecting plate of the driven member has a sector shape;
the pivot portion of the handle has an interior provided with a pivot hole (53) pivotally mounted on the drive shank;
the drive shank is extended through the pivot portion of the handle; and
the gears co-operate to rotate the ratchet wheel of the drive shank.

13. The socket wrench of claim 12, wherein:
the socket wrench further comprising:
a first cover plate (94) mounted on a top of the receiving hole of the driven member;
a second cover plate (95) mounted on a bottom of the receiving hole of the driven member; and
a plurality of screws (P) extended through the second cover plate, the gears and the first cover plate;
the first cover plate is provide with a first shaft hole (941) and a plurality of screw holes (942);
the second cover plate is provide with a second shaft hole (951) and a plurality of through holes (952);
the ratchet wheel of the drive shank is located between the gears;
the ratchet wheel of the drive shank is extended through the first shaft hole of the first cover plate and the second shaft hole of the second cover plate; and
the screws are extended through the through holes of the second cover plate and are screwed into the screw holes of the first cover plate.

14. The socket wrench of claim 12, wherein the handle has a fixed length or has a telescopically adjustable structure.

15. The socket wrench of claim 12, further comprising a socket (A) mounted on the drive shank.
